Europäisches Patentamt

European Patent Office

Office européen des brevets

(11) Publication number: **0 426 867 A1**

# EUROPEAN PATENT APPLICATION
## published in accordance with Art. 158(3) EPC

(21) Application number: 90906371.1

(22) Date of filing: 26.04.90

(86) International application number:
PCT/JP90/00547

(87) International publication number:
WO 90/13115 (01.11.90 90/25)

(51) Int. Cl.5: **G11B 5/84**, B29D 17/00

(30) Priority: 27.04.89 JP 108130/89

(43) Date of publication of application:
**15.05.91 Bulletin 91/20**

(84) Designated Contracting States:
**DE ES FR GB IT NL** .

(71) Applicant: **NIPPON SHEET GLASS CO., LTD.**
**5-11, 3-Chome Doshomachi**
**Chuo-ku Osaka(JP)**

(72) Inventor: **SONO, Kenzou Nippon Sheet Glass**
**Co., Ltd.**
**5-1, Doshomachi 3-chome Chuo-ku**
**Osaka 541(JP)**
Inventor: **OKUDA, Eiji Nippon Sheet Glass Co.,**
**Ltd.**
**5-11, Doshomachi 3-chome Chuo-ku**
**Osaka 541(JP)**
Inventor: **OIKAWA, Masahiro Nippon Sheet**
**Glass Co., Ltd.**
**5-11, Doshomachi 3-chomne Chuo-ku**
**Osaka 541(JP)**
Inventor: **KAWAKITA, Shinya Nippon Sheet**
**Glass Co., Ltd.**
**5-11, Doshomachi 3-chome Chuo-ku**
**Osaka 541(JP)**

(74) Representative: **Jackson, David Spence et al**
**REDDIE & GROSE 16, Theobalds Road**
**London, WC1X 8PL(GB)**

(54) **METHOD OF PRODUCING SUBSTRATES FOR MAGNETIC DISKS.**

(57) A method of producing substrates for magnetic disks wherein fine ruggedness is formed on the surface of a glass substrate by etching using a molten salt that contains a nitrite. The obtained magnetic disk exhibits mechanical and magnetic characteristics that are deteriorated little even when used for a long period of time.

# METHOD OF PRODUCING SUBSTRATES FOR MAGNETIC DISKS

The present invention relates to a process of forming irregularity on the surface of a magnetic recording glass disk substrate. More specifically, the present invention relates to a process of processing the surface of the glass substrate whereby the deterioration of the mechanical property, magnetic property and the like of the substrate for use as magnetic disk can be prevented for a long term.

The composition comprising a magnetic disk substrate and a magnetic film and a protecting film, formed by processes such as sputtering, metal plating, vapor deposition and the like, is called magnetic recording medium (referred to as media hereinbelow).

The main composition of a magnetic memory device comprises the media and a magnetic head for recording and reproduction (referred to as head hereinbelow), and the head and the media are in contact with each other at operational start. By operationally giving a predetermined rotation to the media, a space corresponding to the air layer is generated between the head and the surface of the media, and at such state recording and reproducing operation is carried out. At the end of the operation, the rotation of the media stops, when the head and the media return to the contact state as at the operational start.

As has been described above, contact frictional force is generated at the start and stop of the device, causing the abrasion of a head and a media, which abrasion is the underlying cause of the deteriorated mechanical and magnetic properties (The mode is usually referred to as contact start stop abbreviated as CSS. ).

In the state where water is adsorbed onto the surface of a media which is left stand in the atmosphere of a high humidity, water is diffused into the interstice of a head and the media, causing an agglutination phenomenon. If a device at such state starts, the head and the media thereof are exposed to a high degree of resistance, which may eventually cause the damage of the head and the destruction of the media (This phenomenon is usual referred to as head crash.).

Attention is now focussed on glass as a magnetic disk substrate appropriate for high information density, because glass has excellent smooth surface, is hard and has a high resistance against deformation together with less defects on the surface (Japanese Patent Laid-open No.122707/1974).

As to the CSS resistance and the head crach resistance described above, however, the contacting area of the media surface with the head increases due to the superior mirror surface poperty thereof Problems in view of the increase in frictional resistance and adhesion force generated between a head and a media have been suggested concern the media employing a glass substrate, compared with a media employing substrate of inferior smoothness.

In order to resolve such defects, there has been known a method to reduce frictional force and adhesion force generated betwen a head and a media, by forming minute irregularity on the surface of a substrate with a mechanical means (for example, Japanese Patent Laid-open No.123906/1978).

Alternatively, there has been known another method by forming irregularity on the surface of a glass substrate by chemical etching (for example, Japanese Patent Laid-open No.136035/1985).

A method combining the two methods hereinabove has been known as (for example, Japanese Patent Laid-open No.160010/1988).

In order to generate a preferable frictional property, the minute irregularity formed on a glass substrate, described hereinabove, is preferably in the form of a pitch of 0.1 to several $\mu$m and a depth up to several tens nm.

The present invention is carried out to solve the aforementioned problems of the CSS resistance and headstick resistance of magnetic disk glass substrates.

Conventional mechanical processes, such as the process of forming irregularity comprising polishing with tapes coated with fine powders for example $Al_2O_3$, SiC, etc., may cause the development of cracks on the surface of a fragile material including glass substrate. The cracks have caused indisputable problems such that those cracks may generate the possibility of damaging the smoothness and reducing the intensity of the surface of a glass substrate.

On the other hand, the interstitial part generated by a sharp recess, cracks, etc. cannot be sufficiently washed and dried, so that there remains residues such as stain and the like, which is the underlying cause of inducing the deterioration and the like of the magnetic property over time. The protruded part of the glass has fallen at the collision of a magnetic head at CSS, which has eventually caused head crash. It takes many hours to perform the surface irregularity by the process comprising drawing lines softly with abrasive grains of a small particle size so as to decrease the occurrence of the defects such as recess, cracks; etc. hereinabove to the extent possible, and the process further leads to the consequence of using larger amounts of tape materials and abrasive grain. This raises the cost of the process. The abrasive grain of a small particle size cannot form the irregularity in a desirable form.

The chemical process described above requires preforming a metal layer,which acts the masking films during chemical etching, on a glass substrate and heat treatment.

The aforementioned process combining the mechanical process and the chemical process has problems disadvantageous for practical use, such as the requirement of the tough process control because of the increase in the number of processing stages, that is, the combination of the the processes having the defect of the number of processing stage and the unavailability of effective means for controlling the concentration of hydrofluoric acid to be used for etching.

The present invention has been carried out in order to solve the aforementioned problems, by employing a molten salt containing at least a kind of nitrite of cation for practicing etching in the process of producing a magnetic disk substrate comprising etching the surface of a glass substrate and forming minute irregularity on the surface thereof.

The etching can be practiced by immersing a glass substrate in a molten salt in the melting state, which is heated at for example 400 to 550 °C.

The nitrite to be used in the present invention includes for example nitrite of monovalent cation, illustrated as $M_1NO_2$ ( $M_1$ is Li, Na, K, Cs, Pb, Tl, etc.), nitrite of divalent cation, illustrated as $M_{11}(NO_2)_2$ - ($M_{11}$ is Mg, Ca, Sr, Ba, Cu, Pb, etc.).

The molten salt containing at least a kind of nitrite of cation includes for example a molten salt of a single species of the nitrites mixed molten salts of the nitrites, mixed salts of one or two or more species of the nitrites with other salts.

In case of mixed molten salts of the aforementioned nitrites and other salts, the nitrite ion content in percentage in the mixed molten salts is preferably 5 anion mol % or more to the total amount of anions such as $NO_3^-$, $NO_2^-$, $SO_3^{2-}$, etc; 10 anion mol % or more is more preferable. The nitrite ion content less than 5 anion mol % reduces the etching rate which readily causes the decrease in productivity.

The nitrite may be prepared into a mixed salt of one or two or more species of other salts, but a combination thereof with nitrate represented by $M_1NO_3$ ($M_1$ is Li, Ha, K, Cs, Pb, Tl, etc.) and $M_{11}(NO_3)_2$ - ($M_{11}$ is Mg, Ca, Sr, Ba, Cu, Pb, etc.) is preferable because the molten salts of such nitrate exhibit the similar properties with easy handling. The molten salt containing monovalent cation is more preferable than the molten salt containing divalent cation because of the rapid etching velocity.

The treatment time of the etching is adjustable, depending on each condition including the composition of a glass substrate, the composition of a molten salt, temperature for treatment and the like. The treatment temperature is usually 400 to 450 °C; more preferably it is 420 to 450 °C. The size of the irregularity on the surface of a glass substrate is usually 10 to 100 nm in depth; more preferably 20 to 50 nm. On the other hand, the pitch is usually 30 to 500 nm.

It has not yet been elucidated the reason why the molten salt containing nitrite to be used in the present invention selectively etches the surface of a glass substrate to form the irregularity suitable for the surface irregularity on a magnetic disk substrate.

Nonetheless, simple procedures such as uniform stirring and circulation of the molten salt realize the formation of the objective surface irregularity on the whole surface of a glass plate of a large area, by one-time treatment of a great amount.


Example 1.


Soda lime glass commercially available was cut into a predetermine size and the margin and surface thereof were polished to prepare a glass disk substrate having a smooth surface.

The glass substrate was preheated to 465 °C, which was then immersed in the molten salt of 100 mol % $KNO_2$, heated and maintained at 465 °C, for about 2 minutes. Subsequently, it was taken up and left stand for cooling. The molten salt was stirred and circulated during the immersion.

After cooling, the glass disk substrate was washed and dried, which was then subjected to observation. It was found that an infinite number of irregularity of a pitch of 0.1 μm to several μm and a depth of several nm to several hundreds nm and having relatively gradual slope was uniformly formed over the whole surface of the glass disk substrate.

On the glass disk substrate thus prepared, were formed a metal base film (Cr), and a Co magnetic film (Co: 62.5 wt %, Cr:7.5 wt % Ni:30 wt %) by sputtering process, to finally prepare a magnetic disk coated with a carbon protecting film of about 38 nm film thickness (glass / Ti:75 nm / Al:40nm / Cr:150nm / CoCrNi:60nm).

The magnetic disk thus prepared was subjected to the routine CSS test to measure its durability. Even

3

after the CSS test was repeated thirty-thousand times or more, the magnetic power of the magnetic disk employing the glass substrate prepared according to the present invention was not decreased below 90 %. The CSS test was carried out at the following condition; cleanliness; 100, humidity; 21 ± 2 °C, R/H; 45 ± 5 %.

In the above example, the immersion of the molten salt of $KNO_2$ was carried out at a single process. The chemical strengthening process of a glass substrate to be generally immersed in the $KNO_3$ molten salt may be added, and the process may be performed prior to or after the chemical strengthening thereof. Alternatively, after the $KNO_2$ molten salt may be prepared into a mixed salt of $KNO_3$ and $KNO_2$, the chemical strengthening and etching treatment may be concurrently carried out.

Examples 2 to 8 and Comparative Example

A glass disk substrate was prepared as in Example 1, except that the type of the salt and the etching condition were modified as is shown in Table.

The surface roughness and strengthening degree of glass substrates were measured. The table shows the results as well.

It was verified that the etching roughness and strengthening degree thereof were controllable by means of temperature and time.

Magnetic disks were prepared using glass disk substrates, which were then subjected to the routine CSS test as in Example 1. The results are shown also in the table.

The evaluated friction is represented by the symbol O in case that the static frictional factor is not more than 1.0; it is represented by the symbol X in case that the factor exceeds 1.0. The evaluated power is represented by the symbol O in case that TAA power is not less than 90 %; it is represented by the symbol X in case that the power is less than 90 %.

Table

| | Types of salt | Etching condition Time | Temp. (°C) | Measured value of roughness Depth (Å) | Pitch (Å) | Strength-ening Edge strengthening degree n=50 (MPa) | CSS resistance Fric. | Po. |
|---|---|---|---|---|---|---|---|---|
| Comp. Ex. | $KNO_2$ content/$KNO_3$ 0 mol % | 6hr | 420 | 10 | 100 | mean=380 $\sigma_{n-1}$=89 | × | ○ |
| Ex.2 | $KNO_2$ content/$KNO_3$ 5 mol % | 6hr | 420 | 19 | 250 | ———— | ○ | ○ |
| Ex.3 | $KNO_2$ content/$KNO_3$ 10 mol % | 6hr | 440 | 30 | 400 | mean=440 $\sigma_{n-1}$=89 | ○ | ○ |
| Ex.4. | $KNO_2$ content 100 mol % | 40sec | 440 | 20 | 300 | ———— | ——— | ——— |
| Ex.5 | $KNO_2$ content 100 mol % | 90sec | 440 | 50 | 700 | ———— | ○ | ○ |
| Ex.6 | $KNO_2$ content 100 mol % | 150sec | 440 | 200 | 1400 | ———— | ——— | ——— |
| Ex.7 | $KNO_3$ 85 mol% $Ca(NO_3)_2$ 15 mol % in nitrate | 50hr | 540 | 80 | 1000 | ———— | ——— | ——— |
| Ex.8 | $KNO_3$ 85 mol% | 80hr | 520 | 70 | 600 | ———— | ——— | ——— |

$Tl(NO_2)_2$ 15 mol % in nitrate

In the above Examples, the glass substrate immersed in the molten salt is a substrate having smooth surface, but the substrate may be a substrate having the surface on which irregularity are formed through, for example, mechanical processing.

In the above Examples, there is used as a glass substrate commercially available low-cost soda lime glass capable of being through chemical strengthening. Nevertheless, there is no specific limitation to the glass substrate; the Examples may be performed on optional glass such as non-alkaline glass, low-alkaline glass, borosilicate glass, quartz glass and the like.

A single process, in accordance with the present invention, can enable to easily prepare the nearly ideal form of surface irregularity required for a magnetic disk substrate made of glass. The process of the present invention can be easily carried out for large-scale treatment, and the process control according to the method is also easy, compared with the control of hydrofluoric acid concentration. Furthermore, the process does not require a large-scale disposal equipment against pollution due to no use of fluorine.

**Claims**

1. Process of producing a magnetic disk substrate comprising etching the surface of a glass substrate and forming minute irregularity on the surface thereof, wherein the etching is carried out by employing the molten salt containing at least a kind of nitrite of cation.

2. Process of producing a magnetic disk substrate according to Claim 1, wherein the content of nitrite ion in the molten salt is 5 to 100 anion mol%.

# INTERNATIONAL SEARCH REPORT

International Application No PCT/JP90/00547

## I. CLASSIFICATION OF SUBJECT MATTER (if several classification symbols apply, indicate all) [6]

According to International Patent Classification (IPC) or to both National Classification and IPC

Int. Cl$^5$     G11B5/84, B29D17/00

## II. FIELDS SEARCHED

Minimum Documentation Searched [7]

| Classification System | Classification Symbols |
|---|---|
| IPC | G11B5/84, B29D17/00, C03C15/00 |

Documentation Searched other than Minimum Documentation
to the Extent that such Documents are Included in the Fields Searched [8]

| | |
|---|---|
| Jitsuyo Shinan Koho | 1926 – 1990 |
| Kokai Jitsuyo Shinan Koho | 1971 – 1990 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | JP, A, 64-67714 (Asahi Glass Co., Ltd.), 14 March 1989 (14. 03. 89), (Family: none) | 1 |
| A | JP, A, 64-37718 (Asahi Glass Co., Ltd.), 8 February 1989 (08. 02. 89), (Family: none) | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| July 7, 1990 (07. 07. 90) | July 23, 1990 (23. 07. 90) |

| International Searching Authority | Signature of Authorized Officer |
|---|---|
| Japanese Patent Office | |